Europäisches Patentamt

European Patent Office

Office européen des brevets

(19)

(11) Veröffentlichungsnummer : **0 184 092**
**B1**

(12) # EUROPÄISCHE PATENTSCHRIFT

(45) Veröffentlichungstag der Patentschrift :
**17.08.88**

(51) Int. Cl.⁴ : **B 60 T 11/04**

(21) Anmeldenummer : **85114882.5**

(22) Anmeldetag : **23.11.85**

---

(54) **Bremsseilzugbefestigung.**

---

(30) Priorität : **07.12.84 DE 8435833 U**

(43) Veröffentlichungstag der Anmeldung :
**11.06.86 Patentblatt 86/24**

(45) Bekanntmachung des Hinweises auf die Patenterteilung : **17.08.88 Patentblatt 88/33**

(84) Benannte Vertragsstaaten :
**DE FR GB IT**

(56) Entgegenhaltungen :
**DE-A- 3 328 356**
**DE-B- 1 056 432**
**DE-C-   210 230**
**GB-A-   950 827**

(73) Patentinhaber : **Knott GmbH**
**Obinger Strasse 15**
**D-8201 Eggstätt (DE)**

(72) Erfinder : **Pelzl, Ernst**
**Hemhof 79**
**D-8207 Endorf (DE)**
Erfinder : **Knott, Valentin, Dipl.-Ing.**

**D-8201 Eggstätt (DE)**

(74) Vertreter : **Flach, Dieter Dipl.-Phys. et al**
**Patentanwälte Dipl.-Phys. Dieter Flach Dipl.-Chem.**
**Dr. Steffen Andrae Dipl.-Ing. Dietmar Haug Dipl.-**
**Chem. Dr. Richard Kneissl Prinzregentenstrasse 24**
**D-8200 Rosenheim 24 (DE)**

## Beschreibung

Die Erfindung betrifft eine Bremsseilzugbefestigung nach dem Oberbegriff des Anspruches 1.

Eine gattungsgemäße Bremsseilzugbefestigung ist beispielsweise aus der DE-OS 33 28 356 bekanntgeworden. Diese Bremsseilzugbefestigung umfaßt zwei Halbschalen, die einen Abdeckkörper bilden, der an einer Durchtrittsöffnung im Bremsschild sitzt und da zumindest die eine Halbschale mit einem Vorsprung versehen ist, der in die Durchtrittsöffnung hineinragt, durch die eine Zugöse einer Bremsbackenspreizvorrichtung hindurchragt.

Ferner ist ein Bremsseilzug vorgesehen, der an der Zugöse lösbar befestigt und außerhalb des Abdeckkörpers in einer Hülle gelagert ist. Um eine Bremsseilzugbefestigung mit einer einfachen und schnellen nachträglichen Befestigung des Bremsseiles mit einem hohen Maß an Sicherheit und einem kleinen Bauraum zu ermöglichen, ist bei dieser vorbekannten Bremsseilzugbefestigung vorgesehen, daß die eine Halbschale auf dem Bremsschild fest verschweißt ist, wobei an der Außenseite vorzugsweise der verschweißten Halbschale ein Federarm drehbar gelagert ist, an dessen Ende ein Klemmhalbring die Halbkreiszylinder zumindest mittelbar umschließt. Als sicherer Halt für das Abdeckgehäuse ist in einer alternativen Ausgestaltung ebenso möglich, daß an der einen Halbschale zumindest eine Ausnehmung eingebracht ist, in die ein entsprechender an der anderen Halbschale vorgesehener Vorsprung formschlüssig eingreift.

Das Bremsseilende ist selbst beispielsweise als Doppelkugelsystem ausgebildet, wobei zumindest die am Bremsseilende letzte Verankerungskugel in eine entsprechende Ausnehmung in eine Zugöse über eine seitliche Öffnung und einem daran anschließenden Einführschlitz für das Bremsseil einführbar ist. Da der erwähnte Einführschlitz vom Bremsseilzugende schräg weg verläuft und die zweite Kugel quer zur Zugöse in eine entsprechende Ausnehmung einführbar ist, ist gewährleistet, daß auch bei Zugentlastung eine selbsttätige Entriegelung des Bremsseilzuges an der Zugöse vermieden wird.

Grundsätzlich bekannt ist auch eine entsprechende Verankerung eines Bremsseilzugendes über lediglich einen einzigen kugelförmigen Nippel, der am Bremsseilzugende befestigt und in entsprechender Weise in eine schräg verlaufende Ausnehmung in der Zugöse verankerbar ist.

Allerdings besteht hier insbesondere die Gefahr, daß bei Zugentlastung die Verankerungskugel selbsttätig aus dem Einführschlitz austreten kann, wodurch eine gefährliche Entriegelung verursacht wird. Bei einem nachfolgenden Bremsvorgang nämlich könnten dann die über das Bremsseil eingeleiteten Kräfte nicht mehr auf die Zugöse, den Spreizhebel und damit die Bremsbacken wirken.

Aufgabe der vorliegenden Erfindung ist es von daher, eine Bremsseilzugbefestigung zu schaffen, die trotz einer noch einfacheren und schnelleren nachträglichen Befestigung des Bremsseiles eine nochmals verbesserte Sicherung gegen unbeabsichtigtes Entrasten des Bremsseilzugendes aus der Zugöse mit einfachsten Mitteln gewährleistet. Die Aufgabe wird erfindungsgemäß entsprechend den im kennzeichnenden Teil des Anspruches 1 angegebenen Merkmalen gelöst. Vorteilhafte Ausgestaltungen der Erfindung sind in den Unteransprüchen angegeben.

Durch die erfindungsgemäße Bremsseilzugbefestigung wird auf überraschende Art und Weise eine völlig sichere Verankerung des am Bremsseilzugende befestigten Nippels in einem entsprechenden Aufnahmeraum am stirnseitigen Ende einer Zugöse geschaffen, wobei der Nippel auch bei entlastetem Bremsseilzug niemals aus diesem Aufnahmeraum selbsttätig herausgeführt werden kann. Dies wird im wesentlichen dadurch gewährleistet, daß am Bremsseilzugende ein über den Nippel hinausragender Seilzug-Endabschnitt belassen wird, der über die seitliche Einführöffnung des Nippels an der Zugöse hinaus in eine entsprechende Bohrung eingreift. Auch bei axialem Verschieben ist also das Ende immer in der Zugöse geführt und gehalten.

In einer besonders bevorzugten Weiterbildung nach Anspruch 2 ist dabei die Verlängerungsbohrung in der Zugöse in ihrer Länge so bemessen, daß der Nippel in dem Aufnahmeraum parallel von der seitlichen Einführöffnung bis in seine Anlagestellung bei Zugbeanspruchung problemlos hin und her verschoben werden kann.

Da der Durchmesser der Verlängerungsbohrung zumindest 10 % vorzugsweise mehr als 30 % größer ist als der Durchmesser des Bremsseilzugendes wird ein einfaches Einlegen und Verankern des Nippels in der Zugöse gewährleistet. Das überstehende Seilzugende wird nämlich über die seitliche Einführöffnung in die Bohrung hinein und dann das ganze Bremsseilzugende so auf die Zugöse zugeschwenkt, daß der Nippel über die seitliche Einführöffnung in seinen Aufnahmeraum in der Zugöse gebracht wird. Da im fest eingebauten Zustand der Bremsseilzug über den ihn umgebenden Abdeckkörper immer in axialer Verlängerung der Zugöse gehalten wird, kann der Nippel selbst in dieser Lage auch bei fehlender Zugbeanspruchung seitlich nicht austreten.

Für den Nippel können grundsätzlich unterschiedliche Ausbildungsformen gewählt werden, wobei sich ein zylinderförmiger Körper mit stirnseitigen Halbkugelabschnitten als günstig erwiesen hat, um bei Zugbeanspruchung eine möglichst vollflächige Anlage an einem entsprechenden hohlkugelförmigen Stirnabschnitt des Aufnahmeraumes in der Zugöse sicherzustellen.

In der bevorzugten weiteren Ausgestaltung der Erfindung nach den Ansprüchen 6 bis 10 wird bei gegebenem Höchstmaß an Sicherheit die Befestigung bzw. das Lösen des Bremsseilzugendes noch weiter vereinfacht.

Weitere Vorteile, Einzelheiten und Merkmale der Erfindung ergeben sich nachfolgend aus dem anhand von Zeichnungen dargestellten Ausführungsbeispiel. Dabei zeigen im einzelnen:

Figur 1: eine Schnittdarstellung in Axialrichtung durch einen Teil einer Backenbremse mit der Bremsseilzugbefestigung;

Figur 2: eine Seitenansicht der Bremsseilzugbefestigung quer zu Figur 1;

Figur 3 und 4: ein abgewandeltes Ausführungsbeispiel in zwei vertikalen um 90° zueinander versetzten Schnittdarstellungen.

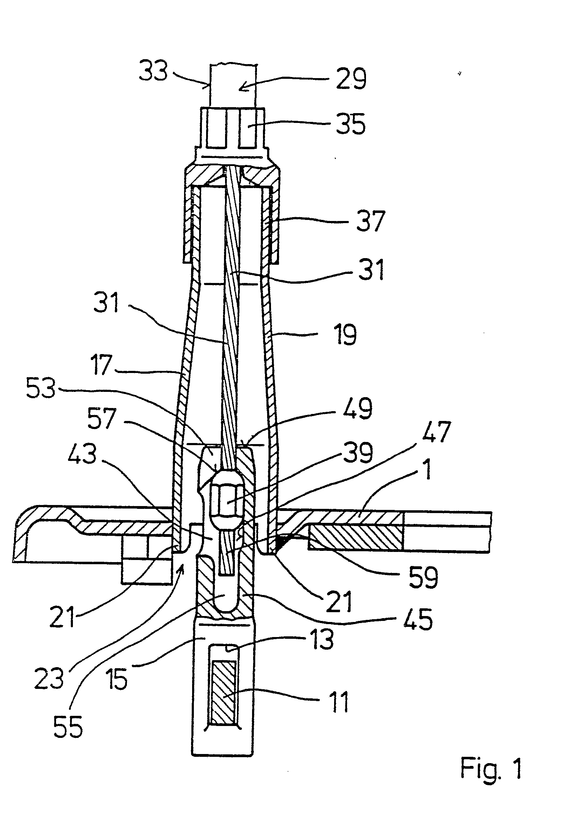

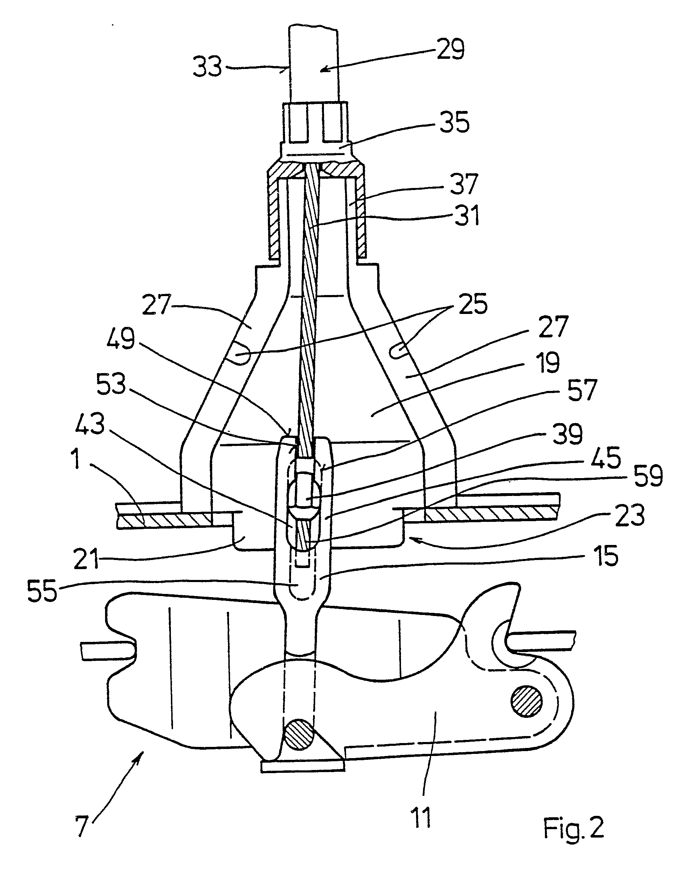

In den Figuren 1 und 2 wird zunächst auf den prinzipiellen Aufbau der Bremsseilzugbefestigung, d. h. auf die Ausbildung und Anbringung des Abdeckgehäuses eingegangen, das grundsätzlich aus der DE-OS 33 28 356 bekannt ist, auf deren Offenbarungsgehalt ausdrücklich Bezug genommen wird.

In den Zeichnungen ist dabei ein Bremsschild 1 gezeigt, unterhalb dessen eine nicht näher gezeigte Bremsbacke und eine Bremsnabe zu liegen kommen. In bekannter Weise können dabei die Bremsbacken durch ein Spreizschloß 7 auseinandergedrückt werden. Das Spreizschloß 7 umfaßt dabei u. a. einen Spreizhebel 11, der in einer unteren Einhängöffnung 13 einer Zugöse 15 eingehängt ist. Bei der Montage des Spreizschlosses 7 in die Bremse wird dabei zunächst der Spreizhebel 11 in die Einhängöffnung 13 der Zugöse 15 eingehängt.

Der Abdeckkörper besteht aus zwei Halbschalen 17 und 19, die mit ihren am unteren Ende vorgesehenen Vorsprüngen 21 durch eine Durchtrittsöffnung 23 durch das Bremsschild 1 hindurchragen.

Während die eine Halbschale 19 an diesen unteren Vorsprüngen 21 beispielsweise auf der Unterseite am Bremsschild 1 verschweißt ist, ist die andere Halbschale 17 lösbar und wird lediglich durch ineinanderragende Vorsprünge bzw. Kerben 25 gegen axiales Verschieben gesichert, die an einem Randflanschbereich 27 an den beiden Halbschalen eingebracht sind.

Der in den Zeichnungen dargestellte Bowdenzug 29 umfaßt ein Bremsseil 31, das außerhalb des Abdeckkörpers in einer Hülle 33 geführt ist, an deren Ende eine Abschlußmuffe 35 vorgesehen ist, die im gezeigten Ausführungsbeispiel mittelbar über die halbzylinderförmigen Endstücke 37 der Halbschalen 17 und 19 überstülpbar ist.

Nachfolgend wird auf die Verankerung des Bremsseilzugendes in der Zugöse näher eingegangen.

Aus den Zeichnungen ergibt sich, daß als Verankerungsglied ein am Bremsseilzug befestigter Nippel 39 dient, unter Bildung eines Seilzug-Endabschnittes 59 auf dem Bremsseilzug fest angebracht ist. Die Zugöse 15 weist ferner eine seitliche Einführöffnung 43 auf, die mit einem in Axialrichtung im Schaft 45 der Zugöse 15 liegenden Aufnahmeraum 47 in Verbindung steht. Von diesem Aufnahmeraum führt bis zu dem dem Bremsseilzug 31 zuweisenden Stirnende 49 ein bis radial nach außen reichender Einführschlitz 53. Auf der gegenüberliegenden Seite zum Aufnahmeraum 57 ist ferner eine radial nach außen verschlossene in Axialrichtung verlaufende Bohrung 55 vorgesehen.

Wie sich aus den Zeichnungen ferner ergibt, ist die Einführöffnung 43 so groß, daß der Nippel 39 parallel hierzu in den Aufnahmeraum 47 eingeführt werden kann, wobei die bei Druckbelastung zum Stirnende 49 hin weisende Druckanlagefläche 57 zum entsprechenden Ende der Einführöffnung 43 auf den Bremsseilzug 31 zu versetzt angeordnet ist.

Bei der Montage bei abgenommener lösbarer Halbschale 17 wird zunächst der über den Nippel 39 hinausragende Seilzug-Endabschnitt 59 über die Einführöffnung 43 bis in die Bohrung 55 hineingesteckt, deren Durchmesser beispielsweise 30 % größer ist als der Durchmesser des Bremsseiles. Nach dem Einstecken wird der noch außerhalb der Einführöffnung 43 liegende Nippel mit schräg nach außen wegragendem Bremsseil gemeinsam so in Figur 1 im Uhrzeigersinne bei in die Bohrung 55 eingestecktem Seilzug-Endabschnitt 59 verschwenkt, daß der Nippel über die Einführöffnung 43 in den Aufnahmeraum 47 eingeführt wird. Danach wird die lösbare Halbschale 17 mit ihren unteren Vorsprüngen durch die Durchtrittsöffnung am Bremsschild 1 hindurchgesteckt und durch Aufstecken der oberen Hülse an der verschweißten Halbschale gesichert. Bei über den Bremsseilzug 31 eingeleiteten Bremskräften nimmt dann der Nippel die in Figur 1 und 2 gezeigte Lage ein, in der er an der oberen Druckanlagefläche 57 am Ende des Aufnahmeraumes 47 anliegt.

Wie in dieser Stellung ersichtlich ist, kann auch bei entlastetem Bremsseilzug 31 ein unbeabsichtigtes Austreten des Nippels 39 durch die Einführöffnung 43 sicher dadurch vermieden werden, da der Seilzug-Endabschnitt 59 auf jeden Fall über die axiale Länge der Einführöffnung 43 hinaus in eine entsprechende Bohrung 55 eingreift. Auch bei axialem Spiel also ist ein Höchstmaß an Sicherheit gewährleistet.

Im gezeigten Ausführungsbeispiel ist ein Nippel 39 mit Zylinderform und mit halbkreisförmigen Endabschnitt verwandt worden. Möglich ist aber genauso ein Verankerungsglied in Form einer am Bremsseil 31 befestigten Kugel, eines Längszylinders ohne Kugelendabschnitte oder eines quer zum Bremsseil 31 angebrachten Zylinders. Weitere Abwandlungsformen des Nippels 39 sind ebenso möglich.

Als besonders günstig erweist sich bei dem gezeigten Ausführungsbeispiel ebenso, daß die Zugöse 15 als Gußteil hergestellt werden kann, ohne daß dann weitere Bearbeitungsschritte noch notwendig sind.

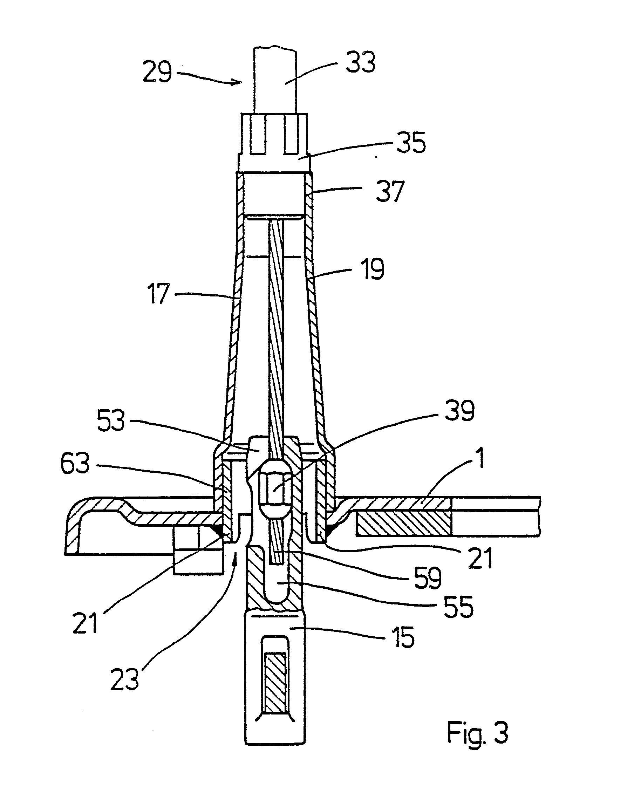

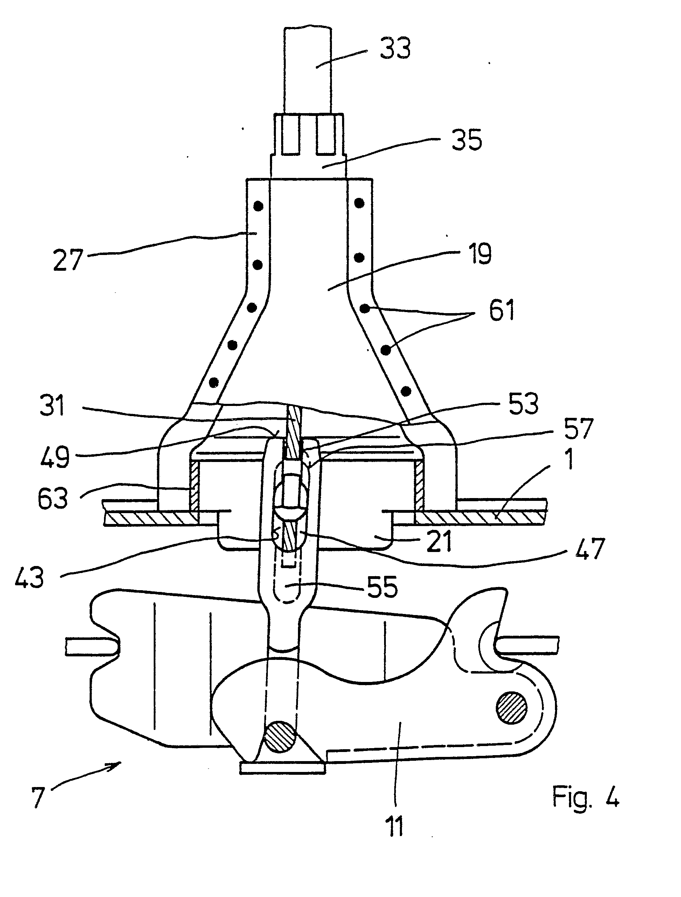

Nachfolgend wird auf das Ausführungsbeispiel nach den Figuren 3 und 4 Bezug genommen, in der eine Abwandlungsform gezeigt ist. Gleiche Bauteile sind dabei mit gleichen Bezugszeichen versehen.

Bei diesem Ausführungsbeispiel besteht der Abdeckkörper aus zwei miteinander verschweißten Halbschalen 17 und 19, so daß dieser also einstückig ausgebildet ist. Die beiden Halbschalen 17 und 19 können punktverschweißt sein, wie dies an den Schweißpunkten 61 verdeutlicht ist.

Ferner ist im Bereich der Durchtrittsöffnung 23 ein Zentrierstutzen bzw. Zentrieransatz vorgesehen, der auf dem Bremsschild 1 befestigt ist. Dieser Zentrieransatz 63 kann als separates Bauteil am Bremsschild 1 angeschweißt oder aber einstükkig mit diesem ausgeformt sein. Im gezeigten Ausführungsbeispiel ist der Zentrieransatz 63 mit entsprechenden unteren Vorsprüngen 21 versehen, mit der er auf der Unterseite am Bremsschild 1 fest eingeschweißt ist.

Bei der Montage des Bremsseilzuges 31 wird das Bremsseilzugende zunächst durch den aufgesteckten Abdeckkörper hindurchgeführt, daß der unten herausragende Nippel 39 in der Zugöse 15 verankert werden kann. Dann wird der aufgesteckte Abdeckkörper mit den miteinander verschweißten Halbschalen 17 und 19 auf das Bremsschild 1 zugeschoben und auf den Zentrieransatz 63 bis zum Anschlag am Bremsschild 1 aufgesteckt. Am gegenüberliegenden Ende wird beim Festspannen des Bowdenzuges dessen Hülle mit der Abschlußmuffe 35 auf das Bremsschild 1 zu vorgeschoben, bis die Abschlußmuffe 35 am rohrförmigen Endstutzen 37 bis zu ihrer Anschlagschulter einrastet. Bei gespanntem Bremsseilzug wird also durch die Abstützung der Hülle des Bowdenzuges der Abdeckkörper auf das Bremsschild 1 zu vorgespannt gehalten. Durch den Zentrieransatz 63 mit entsprechendem Innenquerschnitt zum Abdeckkörper wird dieser, fest und kippsicher auf dem Zentrieransatz 63 gehalten und ist dem Grundsatz nach nur in Axialrichtung verschiebbar, jedoch durch den Bowdenzug gesichert.

Beim Ausbau muß der Bowdenzug lediglich entspannt, der Abdeckkörper vom Zentrieransatz abgezogen werden, um danach durch Verschwenken des Bremsseilzugendes den ansonsten 100 %ig gesicherten Nippel 39 aus der Zugöse 15 auszubauen.

Abschließend sei darauf hingewiesen, daß grundsätzlich auch andere weniger vorteilhafte Ausbildungen eines Abdeckgehäuses abweichend von den gezeigten Ausführungsbeispielen möglich sind.

Im gezeigten Ausführungsbeispiel ist der Zentrieransatz 63 mit im wesentlichen zum Bremsschild 1 senkrechten Wänden gezeigt, auf die der Abdeckkörper mit entsprechend ebenfalls senkrechtem unteren Abschnitt aufsteckbar ist. Möglich ist aber auch, daß der untere Abschnitt des Abdeckkörpers entsprechend wie auch der Zentrieransatz 63 mit leicht zur Lotrechten nach innen geneigten Wänden ausgebildet ist, wenn der Abdeckkörper außen aufgesteckt wird. Sollte in einer anderen Ausführungsform der Abdeckkörper innerhalb des Zentrieransatzes 63 eingesteckt werden, so könnte hier ebenfalls eine Neigung der Seiten des Zentrieransatzes sowie des unteren Aufsteckabschnittes des Abdeckkörpers mit zur Lotrechten leicht nach außen geneigten Wänden ebenso verwendet werden.

Natürlich kann in der geschilderten Zugöse 15 die Bohrung 55 beispielsweise gegenüberliegend zum Einführschlitz 43 offen gestaltet sein. Wichtig ist nur, daß der als "Bohrung" bezeichnete Aufnahmeraum für die Verlängerung 59 des Bremsseilzuges unterhalb der Einführöffnung 43 durch eine zurückbelassene Wandung begrenzt ist, so daß das überstehende Ende des Bremsseilzuges nicht nach vorne hin austreten kann.

**Patentansprüche**

1. Bremsseilzugbefestigung, insbesondere für eine, einen an einer Durchtrittsöffnung (23) in einem Bremsschild (1) sitzenden Abdeckkörper (17, 19) und eine im Bereich der Durchtrittsöffnung (23) hindurchragende Zugöse (15) einer Bremsbackenspreizvorrichtung (7) umfassende Innenbackenbremse, wobei am Endbereich des Bremsseilzuges (31) ein Haltenippel (39) befestigt ist, der über eine in der Zugöse (15) vorgesehene Einführöffnung (43) in einen vorzugsweise gegenüber der Einführöffnung (43) auf das dem Bremsseilzug (31) zu liegende Stirnende (49) der Zugöse (15) versetzt angeordneten Aufnahmeraum (47) mit axial daran auf das Stirnende (49) zu anschließenden Einführschlitz (53) zur Aufnahme des Bremsseilzuges (31) einführbar ist, wobei der Seilzug (31) außerhalb des Einführschlitzes (53) in Axialverlängerung der Zugöse (15) geführt ist, dadurch gekennzeichnet, daß in der Zugöse (15) ausgehend von dem Aufnahmeraum (47) für den Nippel (39) eine Verlängerungsbohrung (55) vorgesehen und an dem Bremsseilzugende ein über den Nippel (39) hinausragender Seilzug-Endabschnitt (59) in einer solchen Länge so vorgesehen ist, daß dieser in die Verlängerungsbohrung (55) hineinragt.

2. Bremsseilzugbefestigung nach Anspruch 1, dadurch gekennzeichnet, daß die Verlängerungsbohrung (55) in ihrer Länge zumindest so bemessen ist, daß der Nippel (39) mit dem überstehenden Seilzug-Endabschnitt (59) von seiner bei Zugbeanspruchung stirnseitigen Druckanlagefläche (57) im Aufnahmeraum (47) weg zumindest in Parallellage zur seitlichen Einführöffnung (43) verschiebbar ist.

3. Bremsseilzugbefestigung nach Anspruch 1 oder 2, dadurch gekennzeichnet, daß der Durchmesser der Verlängerungsbohrung (55) zumindest 10 %, vorzugsweise zumindest 30 % größer ist als der Durchmesser des Bremsseilzuges (31).

4. Bremsseilzugbefestigung nach einem der Ansprüche 1 bis 3, dadurch gekennzeichnet, daß der Nippel (39) als Längszylinder vorzugsweise mit stirnseitigen Halbkugelabschnitten ausgebildet ist.

5. Bremsseilzugbefestigung nach einem der Ansprüche 1 bis 4, dadurch gekennzeichnet, daß die Zugöse (15) als Gußteil ausgebildet ist.

6. Bremsseilzugbefestigung, insbesondere nach einem der Ansprüche 1 bis 5, dadurch gekennzeichnet, daß in Höhe der Zugöse (15) unmittelbar an die Durchtrittsöffnung (23) im Bremsschild (1) ein Zentrieransatz (63) vorgesehen ist, an dem der Abdeckkörper (17, 19) bis zu einem Anschlag auf- bzw. eingesteckt ist, der durch die am Ende des Bowdenzuges (29) vorgesehene und auf den Abdeckkörper (17, 19) auf- bzw. eingesteckte Abschlußmuffe (35) auf das Bremsschild (1) zu vorgespannt gehalten wird.

7. Bremsseilzugbefestigung nach einem der Ansprüche 1 bis 6, dadurch gekennzeichnet, daß der Abdeckkörper (17, 19) einstückig ausgebildet ist und dazu vorzugsweise aus zwei miteinander verschweißten Halbschalen (17, 19) besteht.

8. Bremsseilzugbefestigung nach einem der Ansprüche 1 bis 7, dadurch gekennzeichnet, daß der Zentrieransatz (63) sich vom Bremsschild (1) nach außen erstreckt.

9. Bremsseilzugbefestigung nach Anspruch 8, dadurch gekennzeichnet, daß der Zentrieransatz (63) als separates Bauteil mit dem Bremsschild (1) verschweißt ist.

10. Bremsseilzugbefestigung nach einem der Ansprüche 6 bis 9, dadurch gekennzeichnet, daß der Zentrieransatz (63) an der Durchtrittsöffnung (23) am Bremsschild ausgezogen bzw. angeformt ist.

## Claims

1. Brake pull cable attachment, more particularly for an inner brake block comprising a covering (17,19) arranged at a through aperture (23) and a coupling ring (15) for a brake expander device (7) projecting through the aperture (23), the end of the brake pull cable (31) having attached to it a retaining nipple (39) which can be introduced via an introduction aperture (43) in coupling ring (15) into a space (47), arranged preferably opposite the introduction aperture (43) located at the end (49) of the coupling ring (15) directed towards the brake pull cable (31), with an aperture (53) for taking up the brake pull cable (31) arranged axially to end (49), whereby the brake pull (31) is moved outside the slit (53) in the axial extension of coupling (15), characterised in that in the coupling (15) an extension boring (55) is provided from the space (47) for accommodating the nipple (39), and at the end of the brake pull cable there is an end section (59) projecting from the nipple (39) of such a length as to project into the extension boring (55).

2. Brake pull cable according to claim 1, characterised in that the extension boring (55) is of such a length that the nipple (39) with the projecting end section of the brake pull cable is at least movable, in a parallel position to the lateral aperture (43), away from its pressure surface (57) in the space (47) during pulling.

3. Brake pull cable attachment according to one of claims 1 or 2 characterised in that the diameter of the extension boring (55) is at least 10 %, preferably 30 %, greater than the diameter of the brake pull cable (31).

4. Brake pull cable attachment according to one of claims 1 to 3 characterised in that the nipple (39) is in the form of a longitudinal cylinder with semi-spherical sections at its ends.

5. Brake pull cable attachment according to one of claims 1 to 4 characterised in that the coupling (15) is a cast component.

6. Brake pull cable attachment according in particular to one of claims 1 to 5 characterised in that at the top of the coupling ring (15) a centering attachment (63) is provided directly at the through aperture (23) in the brake shield (1), onto which the covering (17,19) is placed on or inserted up to a stop face, the centering attachment being held under tension vis-à-vis the brake shield (1) by means of the terminal sleeve (35) provided at the end of the Bowden cable (29) and placed on or inserted in the covering (17,19).

7. Brake pull cable attachment according to one of claims 1 to 6 characterised in that the covering (17,19) is in one part and preferably consists of two half shells (17,19) welded together.

8. Brake pull cable attachment according to one of claims 1 to 7 characterised in that the centering attachment (63) extends outwards from the brake shield (1).

9. Brake pull cable attachment according to claim 8 characterised in that the centering attachment (63) is a separate component welded to the brake shield (1).

10. Brake pull cable attachment according to one of claims 6 to 9 characterised in that the centering attachment (63) is removed and attached at the through aperture (23) on the brake shield.

## Revendications

1. Attache de câble de frein, en particulier pour un frein à mâchoires intérieures, comportant une coiffe (17, 19) installée au-dessus d'un orifice de passage (23) d'un flasque de frein (1) et un anneau de traction (15) d'un dispositif d'écartement des mâchoires de frein (7) traversant l'orifice de passage (23), où à l'extrémité du câble de frein (31) se trouve fixé un nipple de retenue (39), lequel est inséré, par une ouverture d'introduction (43) prévue dans l'anneau de traction (15), dans un logement (47) disposé de préférence de manière décalée par rapport à l'ouverture d'introduction (43), à l'extrémité (49) de l'anneau de traction (15) située du côté du câble de frein (31), et prolongé par une fente d'introduction (53) axiale jusqu'à l'extrémité (49), destinée à recevoir le câble de frein (31), lequel se trouve maintenu dans le prolongement axial de l'anneau de traction (15) à l'extérieur de la fente d'introduction (53), caractérisée en ce qu'il est prévu, dans l'anneau de traction (15), une cavité allongée (55) dans le prolongement du logement (47) du nipple (39) et, à l'extrémité du câble, un bout de câble (59) se prolongeant au-delà du nipple (39) de longueur suffisante pour pénétrer dans l'orifice allongé (55).

2. Attache de câble de frein suivant la revendication 1, caractérisée en ce que la longueur de la cavité allongée (55) prévu dans l'anneau de traction (15) est étudiée pour que le nipple (39) avec son bout de câble en saillie (59) puisse se déplacer dans le logement (47) de manière parallèle au moins à l'ouverture d'introduction latérale (43), lorsqu'il quitte sa surface de contact (57) correspondant à un effort de traction sur le câble de frein (31).

3. Attache de câble de frein suivant la revendication 1 ou 2, caractérisée en ce que le diamètre de l'orifice allongé (55) est supérieur de 10 % au moins, de préférence 30 % au moins, au diamètre du câble de frein (31).

4. Attache de câble de frein suivant une des revendications 1 à 3, caractérisée en ce que le nipple (39) a la forme d'un cylindre allongé avec de préférence des extrémités hémisphériques.

5. Attache de câble de frein suivant une des revendications 1 à 4, caractérisée en ce que l'anneau de traction (15) est conçu comme une pièce coulée.

6. Attache de câble de frein suivant une des revendications 1 à 5 en particulier, caractérisée en ce qu'il est prévu à hauteur de l'anneau de traction (15), directement dans l'orifice de passage (23) du flasque de frein (1), un manchon de centrage (63) sur ou dans lequel la coiffe (17, 19) est emboîtée jusqu'à une butée et se trouve maintenue contre le flasque de frein (1) par un manchon de fermeture (35) prévu à l'extrémité du câble Bowden (29) et emboîté sur ou dans la coiffe (17, 19).

7. Attache de câble de frein suivant une des revendications 1 à 6, caractérisée en ce que la coiffe (17, 19) est conçue d'une seule pièce et est constituée à cet effet de préférence de deux demi-coquilles (17, 19) soudées l'une à l'autre.

8. Attache de câble de frein suivant une des revendications 1 à 7, caractérisée en ce que le manchon de centrage (63) se prolonge vers l'extérieur du flasque de frein (1).

9. Attache de câble de frein suivant la revendication 8, caractérisée en ce que le manchon de centrage (63) est une pièce séparée soudée au flasque de frein (1).

10. Attache de câble de frein suivant une des revendications 6 à 9, caractérisée en ce que le manchon de centrage (63) de l'orifice de passage (63) est coulé d'une pièce avec le flasque de frein (1) ou réalisé par étirage de la matière du flasque de frein (1).

Fig. 1

0 184 092

Fig. 2

Fig. 3

Fig. 4